# EUROPEAN PATENT SPECIFICATION

(11) **EP 1 079 700 B1**
(45) Date of publication and mention of the grant of the patent: **17.03.2004**
(21) Application number: 98921744.3
(22) Date of filing: 21.05.1998
(51) Int. Cl.: A23D 9/013, A23L 1/01

(54) **FRIED FOOD AND SHORTENING**
FRITIERTES NAHRUNGSMITTEL UND BACKFETT
PRODUITS ALIMENTAIRES FRITS ET MATIERE GRASSE

(43) Date of publication of application: 07.03.2001
(73) Proprietor: Kao Corporation, Tokyo 103-0025 (JP)
(72) Inventor: MORI, Hideki, Kao Corp. Res. Lab., Kashima-gun, Ibaraki 314-0103 (JP); SAKAI, Hideaki, Kao Corp. Res. Lab., Kashima-gun, Ibaraki 314-0103 (JP); TANAKA, Yukitaka, Kao Corp. Res. Lab., Kashima-gun, Ibaraki 314-0103 (JP); YASUKAWA, Takuji, Kao Corp. Res. Lab., Kashima-gun, Ibaraki 314-0103 (JP)
(74) Representative: HOFFMANN - EITLE
(86) International application number: PCT/JP1998/002226
(87) International publication number: WO 1999/059424

(56) References cited:
- EP-A- 0 307 154
- EP-A- 0 378 893
- EP-A- 0 525 915
- EP-A- 0 679 712
- EP-A- 0 836 805
- WO-A-95/22256
- US-A- 4 976 984
- PATENT ABSTRACTS OF JAPAN vol. 096, no. 011, 29 November 1996 -& JP 08 173036 A (KAO CORP), 9 July 1996
- PATENT ABSTRACTS OF JAPAN vol. 096, no. 011, 29 November 1996 -& JP 08 173035 A (KAO CORP), 9 July 1996

## Description

The present invention relates to a shortening oil which contains diglycerides in a high concentration and a food fried with the shortening oil.

It is becoming clear that diglycerides have a function of being less likely to become body fat (See JP-A 4-300826). In order to ingest diglycerides in an effective amount through daily foods processed with fats, it is necessary to produce a fat-processed food containing diglycerides in a high concentration.

On the other hand, the fats used in conventional shortenings for frying are non-blended fats such as soybean oil, rapeseed oil, corn oil, palm oil, coconut oil, and lard and fractions obtained from natural fats in order to be suitable for individual applications. However, fats having a high degree of unsaturation have poor storage stability and thus pose a problem that snack cakes produced with the fats develop an odor of deteriorated fats. Although fats based on palm oil or hydrogenated oils have frequently been used in order to prevent fat deterioration during storage, these fats have the problem that the fats based on palm oil taste too light and are poor in flavor, while the hydrogenated oils tend to emit an odor changed by hydrogenation upon heating.

In the production of friedcakes such as potato chips, the deep frying process reduces the water contained in starch for a short time to thereby cause the fried product to be crispy. However, such friedcakes have a problem that even slight moisture absorption reduces the crispness and considerably impairs the flavor. French fried potatoes and fried chicken also can be made to exhibit crispness by reducing the water content of the surface layer of the coating in the deep frying process. However, when the coating surface layer absorbs moisture even slightly, these fried foods also have reduced crispness and impaired flavor.

Furthermore, deep-fried foods such as fried cakes, french fried potatoes, fried chicken, and doughnuts often give off or ooze oil, giving not only poor appearance but losing crispness in the mouth, and being sticky.

US-A 4,976,984 and EP-A 525,915 disclose edible fats containing phospholipids and diglycerides. However, there is no description therein concerning the deep frying process using an edible fat containing diglycerides in a high concentration. Moreover, shortening containing phospholipids has a problem that it discolors upon heating. EP-A-0 378 893 discloses an edible oil and fat composition which comprises a phospholipid and a glyceride mixture comprising 5 to 100 percent by weight of a diglyceride, said phospholipid being a decomposition product of natural lecithin, stable and suitable for food and a cooking oil. WO-A-95 22256 discloses a fat blend comprising 30-70 wt% of diglycerides and 70-30 wt% of triglycerides, which diglycerides are composed of 25-70 wt% SU, 10-70% UU, and less than 30 wt% of SS (S= saturated fatty acid C₁₂-C₂₄; U=unsaturated fatty acid ≥ C₁₆) and wherein the triglycerides contain 1-70 wt% of S₂U-triglycerides, while the SAFA content of the blend is less than 50 wt%.

Accordingly one object of the present invention is to provide a shortening or a shortening oil which contains diglycerides in a high concentration that is effective in reducing bubbling during deep frying.

A further object of the present invention is to provide fried foods, especially
, prepared using the shortening of the present invention, that have low water content and are not likely to get wet over long periods of time, giving a satisfactory feeling in the mouth.

A further object of the present invention is to provide fried potatoes and fried chicken prepared using the present shortening, which are crisp and are not likely to be reduced in crispness over long time periods.

A further object of the present invention is to provide a shortening that gives . reduced oil absorption in deep frying during doughnut production.

A further object of the present invention is to provide a shortening that gives reduced oil oozing and reduced greasiness, as well as improved crispness in foods produced by deep frying in the shortening, such as fried cakes, french fried potatoes, friedcahicken and doughnuts.

These and other objects of the present invention have been satisfied by the discovery of a fried food as defined in claim 1 and of a fat composition comprising:
a monoglyceride content of 2% by weight or lower, a diglyceride content of 55 to less than 95% by weight, and a triglyceride content of 5 to less than 45% by weight, wherein
   (1) from 55 % by weight to less than 80% by weight of the fatty acid groups contained in the diglycerides are unsaturated fatty acid groups,
   (2) the diglycerides comprise 0.5 % by weight to less than 20% by weight of SS components, 20 % by weight to less than 55% by weight of SU components, and 25 % by weight to less than 70% by weight of UU components, wherein S represents a C₁₄₋₂₂ saturated fatty acid group and U represents a C₁₄₋₂₂ unsaturated fatty acid group, wherein the total of %SS+%SU+%UU = 100, and
   (3) a weight ratio of C₁₄ and C₁₆ saturated fatty acid groups contained in the diglycerides to C₁₈, C₂₀, and C₂₂ saturated fatty acid groups contained in the diglycerides is 1.0 to 8.0, and its use in preparing a shortening for frying, as well as fried foods prepared with the oil composition.

The present invention provides a oil or shortening composition comprising from 55 % by weight to less than 95% by weight of diglycerides, in which 55 % by weight to less than 93% by weight of the fatty acids are unsaturated fatty acids, and a food fried with the shortening composition.

In addition the present invention provides food fried with an oil composition comprising 55 to 95 % by weight of diglycerides, wherein 55 to less than 93 % by weight of the fatty acids of which are composed of unsaturated fatty acid groups. The fried food may include, for example, fried cookies, fried potato chips, fabricated potato chips, fried snack food, fried confectionary of rice, wheat, corn, potato, sweet potato, fried chicken and fried doughnuts.

It is preferable that the fried food further comprises 2 % by weight or less of monoglycerides and 5 to 45 % by weight of triglycerides, wherein the diglycerides comprise 2 to 20 % by weight of SS, 20-55 % by weight of SU, 25-70 % by weight of UU, wherein S represents C₁₄₋₂₂ saturated fatty acid group and U represents C₁₄₋₂₂ unsaturated fatty acid groups and the total of %SS + %SU + %UU = 100. The diglycerides also have a weight ratio of the saturated fatty acid groups having C₁₄ and C₁₆ to the saturated fatty acid groups having C₁₈, C₂₀ and C₂₂ of from 1.0 to 8.0.

The present invention also provides a method for using the oil composition as defined above as a substitute for a frying shortening or oil in cooking and frying foods; a method for improving the taste, flavor, appearance and/or feeling in the mouth of a fried food by frying it with the present oil composition and; a method for keeping a fried food dry by frying it with the present oil composition to get crispy.

The term "fried cake" as used herein means a cake obtained by deep-frying a composition (preferably of dough) comprising starch as the main ingredient. Examples thereof include potato snacks such as potato chips, fabricated potatoes, and shoestring potatoes, flour-based snacks, corn-based snacks, rice-based snacks, snacks based on sweet potato, rice cakes such as fried rice crackers, and fried dough cakes.

The term "french fried potatoes" means a food obtained by deep-frying strips of a white potato. A seasoning such as common salt may be added before or after deep frying.

The term "fried chicken" means a food obtained by covering feedstock chicken with a coating powder comprising starch as the main ingredient, such as flour or potato starch, and deep-frying the covered chicken. Any part of a chicken can be used, including, but not limited to thighs, breasts, and wings. The chicken may be immersed in a liquid seasoning before deep frying.

The term "doughnut" means a food obtained by shaping dough obtained by mixing flour, sugar, egg, a dairy product, a flavor, into a disk, ellipse, or annular form and deep-frying the shaped dough. Examples thereof include cake doughnuts, soft doughnuts, yeast-leavened doughnuts, and fried danish pastries, and further include fried breads stuffed with a cooked filling, such as curry-stuffed fried bread and piroshki.

The feedstock fat or oil for use in the present invention shortening is not limited in its source. Vegetable, animal, and other fats and oils may be used as the feedstock. Examples thereof include rapeseed oil, sunflower oil, corn oil, soybean oil, rice oil, safflower oil, palm oil, coconut oil, and beef tallow. Fractions of these fats or oils and those having melting points that are modified by hydrogenation, transesterification, etc. are also useful. A mixture of a hardened rapeseed oil and palm oil and a mixture of a hardened soybean oil and palm oil are preferred.

The shortening of the present invention is preferably obtained by esterifying fatty acids derived from any of the aforementioned fats and oils with glycerol to obtain a fat having a high diglyceride content. This fat alone or a mixture thereof with any of the aforementioned starting fats and oils can be used. An antioxidant can be added thereto if desired. The excess monoglycerides yielded by the reaction can be removed by molecular distillation or chromatography. The esterification can be conducted by a chemical reaction using an alkali catalyst, etc. It is preferably conducted enzymatically under mild conditions using, e.g., a lipase having 1,3-position selectivity, because the fat obtained by the enzymatic method is excellent in flavor.

The shortening of the present invention comprises a fat composition containing diglycerides, effective in inhibiting body fat accumulation, in a high concentration. Specifically, the shortening comprises a fat composition having a diglyceride content of from 55 to less than 95% by weight, preferably 65 to less than 95% by weight, and in which 55 to less than 93% by weight of the fatty acid groups contained in the diglycerides are unsaturated fatty acid groups. If the content of unsaturated fatty acid groups contained in the diglycerides is lower than 55% by weight, (based on total fatty acid groups) the shortening has too high a melting point to have satisfactory handleability. If the content thereof is higher than 93% by weight, deep frying with the shortening gives fried foods which are likely to give off or ooze oil and give an unsatisfactory greasy feeling in the mouth.

The content of unsaturated fatty acid groups contained in the diglycerides is preferably from 55 to less than 80% by weight, because this shortening is not as likely to give off or ooze oil in the fried product. In particular, a preferred combination of fatty acid groups comprises from 0.5 to less than 20% by weight of SS components, from 20 to less than 55% by weight of SU components, and from 25 to less than 70% by weight of UU components, wherein S is a C₁₄₋₂₂ saturated fatty acid group and U is a C₁₄₋₂₂ unsaturated fatty acid group. The SS component, SU component, and UU component contents are preferably from 2 to less than 16% by weight, from 25 to less than 50% by weight, and from 30 to less than 65% by weight, respectively, and are more preferably from 4 to less than 12% by weight, from 30 to less than 48% by weight, and from 35 to less than 60% by weight, respectively. If the SS component content exceeds 20% by weight, the shortening has too high a melting point and is too hard to be readily handleable. If the SU component content is lower than 20% by weight, SS component crystals separate out and are likely to cause handleability problems. SU component contents of higher than 55% by weight are undesirable in that the production of such a shortening necessitates fractionation as an essential step and leads to increased cost. If the UU component content is higher than 70% by weight, oil oozing after deep frying is likely to occur.

In the diglycerides contained in the present shortening, the weight ratio of the C₁₄ and C₁₆ saturated fatty acid groups to the C₁₈, C₂₀, and C₂₂ saturated fatty acid groups is preferably 1.0 to 8.0, more preferably 2.0 to 7.0. Compared to conventional fats comprising mainly triglycerides, the present fat compositions containing diglycerides in a high concentration tend to significantly change in physical properties, depending on the kinds of the fatty acid groups contained therein. If the above ratio is lower than 1.0, the shortening tends to develop dense and fine crystals and is too hard to be readily handleable. If the above ratio exceeds 8.0, the foods deep-fried with the shortening tend to have reduced crispness and give a greasy feeling in the mouth.

Some fats contain a slight amount of natural diglycerides. The content of all diglycerides contained in the present shortening, including those natural diglycerides, is preferably within the range shown above.

In the present invention, the shortening preferably has a smoke point of not lower than an ordinary cooking temperature, for example at 170°C. From the standpoint of attaining satisfactory flavor, the content of monoglycerides contained in the present shortening is preferably 2% by weight or lower, more preferably below 1.5% by weight, still more preferably below 1.3% by weight.

The fried food of the present invention is one containing the fat composition which has been absorbed thereby in the deep frying process. For example, potato chips can contain from 10 to 50% by weight of the present fat composition absorbed in the deep frying process. Fried chicken, french fried potatoes, and doughnuts can contain the fat composition around the surface thereof in a high concentration.

Fried foods obtained using a large amount of the fat composition have a more stable quality than ones obtained with a small amount. Deep frying with a larger amount of the fat can have a reduced oil temperature fluctuation. The amount of the fat used for deep frying is desirably 5 liters or larger, preferably 10 liters or larger.

For inhibiting deterioration of the fried foods, an antioxidant such as a tocopherol, an ascorbic ester and a natural antioxidizing ingredient may also be used. Examples of the ascorbic ester include palmitate and stearate. Examples of the natural antioxidizing ingredient include plant extracts obtained from leaves or roots of tea, and herbs such as rosemary, peach, etc.

Although phospholipids are not usually added to the present shortening, they can be added in such an amount as not to cause thermal discoloration, preferably 100 ppm or less, more preferably 50 ppm or less.

### EXAMPLES

Having generally described this invention, a further understanding can be obtained by reference to certain specific examples which are provided herein for purposes of illustration only.

In the Examples, all percents and parts are by weight.

### EXAMPLE 1

### Preparation of Diglycerides

3.5 kg of rapeseed oil was mixed with 3.5 kg of distilled water and 5 g of a commercial lipase preparation, "Lipase OF", trade name, manufactured by Meito Sangyo Co. Ltd.. The mixture was reacted, while being stirred at 36°C for 5 hours. Thereafter, the reaction mixture was centrifuged, and fatty acids derived from rapeseed oil were obtained from the upper layer.

The fatty acids obtained above were mixed with glycerol at a molar ratio of about 2/1, and the resultant mixture was reacted at 50°C at a reduced pressure using as the catalyst a commercial lipase preparation, "Lipozyme 3A", trade name, manufactured by Novo Industri A.S. which is an immobilized lipase having 1,3-position selectivity. After the lipase preparation was filtered off, the obtained product mixture was subjected to molecular distillation and purified in a conventional manner to obtain a diglyceride mixture derived from rapeseed oil and having the following composition:

| | |
|---|---|
| Triglycerides | 12%, |
| Diglycerides | 87%, and |
| Monoglycerides | 1%. |

### Preparation of Shortening for Frying

0.07% of tocopherol and 0.03% of ascorbic ester were added as antioxidants to each of the diglyceride mixture, rapeseed oil, and four mixtures of the diglyceride mixture with rapeseed oil, which are shown in Table 1. Thus, shortenings A to F were obtained.

**Table 1**

| | Fat Composition (%) | | Content of unsaturated fatty acids in DG (%) | Glyceride composition (%) | | | AV | Smoke point (°C) |
|---|---|---|---|---|---|---|---|---|
| | Rapeseed oil | DG | | MG | DG | TG | | |
| A | 30 | 70 | 91.4 | 0.8 | 61.6 | 37.6 | 0.05 | 225 |
| B | 20 | 80 | 91.4 | 0.8 | 70.1 | 29.1 | 0.06 | 220 |
| C | - | 100 | 91.4 | 1.0 | 87.0 | 12.0 | 0.09 | 218 |
| D | 50 | 50 | 91.4 | 0.6 | 44.7 | 54.7 | 0.06 | 230 |
| E | 80 | 20 | 91.4 | 0.4 | 19.2 | 80.4 | 0.07 | 235 |
| F | 100 | - | 91.4 | 0.2 | 2.3 | 97.5 | 0.09 | 238 |

### Production and Evaluation of Potato Chips

Each of shortenings A to F was introduced in an amount of 10 kg into an electric fryer, SEF-D9A, trade name, manufactured by Sanyo Electric Co., Ltd., and heated to 180°C. A peeled white potato was sliced in a thickness of about 1.5 mm, washed with water to remove the surface starch and soluble components therefrom, and then dried by wiping off the remaining water. The sliced potato was heated for 3 minutes in each of the shortenings heated at 180°C to produce potato chips. Immediately thereafter, the water content of the potato chips was measured. During heating, each shortening was examined for bubbling. The potato chips were examined for feeling in the mouth and moisture absorption, immediately after production and after storage at 20°C and 65±5% RH (relative humidity). Flavor evaluation was further conducted after the potato chips had been wrapped with an aluminum foil laminate and stored at a cold dark place for 30 days.

### Rubbling during deep frying

The shortenings were observed for bubbling in five grades. Those almost free from bubbling were marked at point 5, while rapeseed oil (shortening F) was marked at point 1.

The obtained results are shown in Table 2.

### Feeling in the mouth

The potato chips were evaluated for crispiness in five grades by the sense of ten panelists. Those which gave a remarkable crispness and lightness in the mouth were rated at point 5, while those which gave a rather low crispness and heaviness in the mouth were rated at point 1. The evaluations by the ten panelists were averaged.

The obtained results are shown in Table 3.

### Water content and moisture absorption

Water content: Water content was measured with an oil content/water content meter, AVC-80, trade name, manufactured by CEM.

Moisture absorption: The potato chips were weighed at intervals, and the increase in water content (%) was determined from the increase in weight.

The obtained results are shown in Table 4.

### Flavor

The potato chips were evaluated for flavor in five grades in a sensory test by ten panelists. Those having neither an odor of deteriorated fats nor offensive odor were marked at point 5. Those deep-fried with rapeseed oil (shortening F) were marked at point 1. The evaluations by the ten testers were averaged.

The obtained results are shown in Table 5.

**Table 2**

| Bubbling During Deep Frying | | | | | | |
|---|---|---|---|---|---|---|
| | Examples | | | Comparative compounds | | |
| Shortening for frying | A | B | C | D | E | F |
| Bubbling | 3.5 | 3.5 | 4.0 | 2.0 | 1.5 | 1.0 |

**Table 3**

| Feeling in the Mouth | | | | | | |
|---|---|---|---|---|---|---|
| | Examples | | | Comparative compounds | | |
| Shortening for frying | A | B | C | D | E | F |
| just after production | 4.7 | 4.7 | 4.8 | 4.2 | 3.8 | 3.5 |
| after two days | 4.1 | 4.2 | 4.5 | 3.2 | 3.0 | 2.0 |
| after 5 days | 3.9 | 3.9 | 3.9 | 2.5 | 1.5 | 1.2 |

**Table 4**

| Water Content and Moisture Application | | | | | | | |
|---|---|---|---|---|---|---|---|
| | | Examples | | | Comparative compounds | | |
| Shortening for frying | | A | B | C | D | E | F |
| Water content (%) | just after production | 1.8 | 1.7 | 1.6 | 2.3 | 2.5 | 2.8 |
| Increase in water content (%) | just after production | 0 | 0 | 0 | 0 | 0 | 0 |
| | after 2 days | 1.0 | 0.9 | 0.8 | 1.4 | 1.7 | 2.0 |
| | after 5 days | 1.5 | 1.3 | 1.3 | 2.3 | 2.6 | 2.8 |

**Table 5**

| Flavor | | | | | | |
|---|---|---|---|---|---|---|
| | Examples | | | Comparative compounds | | |
| Shortening for frying | A | B | C | D | E | F |
| after 30 days | 4.5 | 4.7 | 4.7 | 3.7 | 2.6 | 1.0 |

### EXAMPLE 2

### Production of Doughnuts

Each of shortenings C and F was introduced in an amount of 1 kg into a frying pan and heated to 180°C. 30 parts of sugar was mixed with 8 parts of a shortening for kneading, New Econa, trade name, manufactured by Kao Corp., Japan, and 1 part of common salt. The mixture was stirred with a vertical mixer equipped with a beater. The mixture was further stirred until it became creamy while 20 parts of egg and 35 parts of water were gradually added thereto. Thereto were added 80 parts of weak flour, 20 parts of strong flour, and 3 parts of a baking powder. The resultant mixture was stirred for 90 seconds. After the obtained dough was allowed to stand at room temperature for about 20 minutes, it was rolled out to a thickness of about 1 cm. This dough sheet was punched with a cookie cutter for doughnuts having a ring diameter of 75 mm. Four of the dough pieces thus obtained were dropped into the shortening heated at 180°C, and deep-fried therein for several minutes with occasional turning until the surfaces thereof turned gold. The fried dough pieces were picked up with a metal basket and the excess oil drained off. The above operation was repeated twice to fry four dough pieces.

### Evaluation and Results

The total amounts of shortenings C and F absorbed were calculated from the weights thereof remaining in the frying pan, and were found to be 119.9 g and 192.9 g, respectively. The doughnuts fried with shortening C gave a better, crispy feeling in the mouth and a less greasy feeling than those fried with shortening F.

### EXAMPLE 3

### Production of French Fried Potatoes

Each of shortenings C and F was introduced in an amount of 10 kg into an electric fryer, SEF-D9A, trade name, manufactured by Sanyo Electric Co., Ltd., and heated to 180°C. Unpeeled potatoes were well washed and cut lengthwise into four to six pieces each in a comb shape. These potato pieces were soaked in water for about 15 minutes. After the water remaining on the potato pieces was wiped off, the potato pieces were put into each shortening heated at 180°C, and fried therein for several minutes, while gently stirring, until each piece was wholly cooked and the surface thereof turned gold.

### Evaluation and Results

In deep frying, shortening C bubbled less than shortening F. 5 minutes after deep frying, the fried potatoes were examined for appearance, and almost no oil was given off. Within 15 minutes after deep frying, the fried potatoes were evaluated for feeling in the mouth. The potatoes fried with shortening C had surface crispiness and gave a more satisfactory feeling in the mouth and a less greasy feel than those fried with shortening F.

### EXAMPLE 4

### Production of Fried Chicken

Each of shortenings C and F was introduced in an amount of 10 kg into an electric fryer, SEF-D9A, trade name, manufactured by Sanyo Electric Co., Ltd., and heated to 170°C. Chicken thigh was cut into pieces slightly bigger than one mouthful, and a small amount of salt, pepper, and lemon juice were added thereto. After they were well mixed, the chicken pieces were covered lightly with flour. The flavored chicken pieces were dropped into each shortening heated at 170°C and fried for several minutes until they came to the shortening's surface.

### Evaluation and Results

In deep frying, shortening C bubbled less than shortening F. 5 minutes after the deep frying, the fried chicken was examined for appearance, and almost no oil was given off. Within 15 minutes after deep frying, the fried chicken was evaluated for feeling in the mouth. The chicken fried with shortening C had crispiness in the coating surface and gave a more satisfactory feeling in the mouth and a less greasy feeling than those fried with shortening F.

### EXAMPLE 5

### Preparation of Diglycerides

A hardened rapeseed oil (melting point: 31.5°C) and palm oil were used as the feedstock in the same manner as in Example 1 to obtain fatty acids. The composition of the fatty acids obtained from each oil is shown in Table 6.

**Table 6**

| | Hardened rapeseed oil (%) | Palm oil (%) |
|---|---|---|
| C_{14:0} | - | 1.1 |
| C_{16:0} | 3.8 | 44 |
| C_{16:1} | 0.2 | 0.1 |
| C_{18:0} | 12.0 | 4.5 |
| C_{18:1} | 78.7 | 39.2 |
| C_{18:2} | 0.2 | 10.1 |
| C_{18:3} | - | 0.4 |
| C_{20:0} | - | 0.4 |
| C_{20:1} | 2.3 | - |

The two fatty acid mixtures were mixed with each other in the proportions shown in Table 7, and diglyceride mixtures 1 to 4 were obtained therefrom in the same manner as in Example 1.

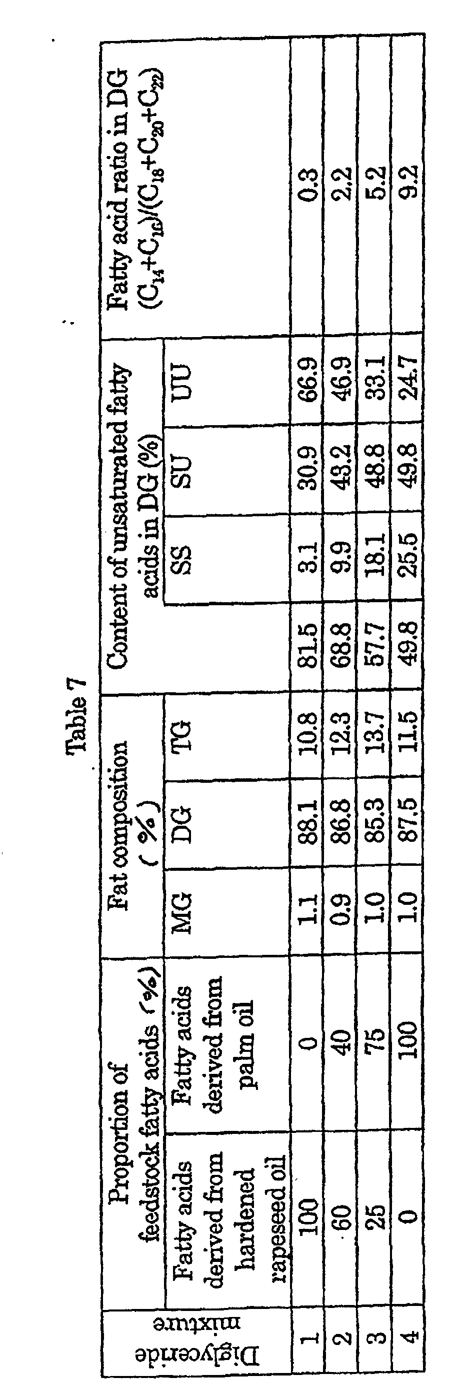

### Preparation of Shortenings for Frying

The diglyceride mixtures 1 to 4 shown in Table 7 were heated, and 0.07% of tocopherol and 0.03% of ascorbic ester were added thereto as antioxidants. The mixtures were cooled to room temperature to obtain shortenings G to J.

### Production and Evaluation of Doughnuts

Each of shortenings F to J was introduced in an amount of 10 kg into an electric fryer, SEF-D9A, trade name, manufactured by Sanyo Electric Co., Ltd., and heated to 180°C. Dough pieces were obtained in the same manner as in Example 2. The obtained dough pieces were dropped into each of the shortenings heated at 180°C, and deep-fried therein for several minutes with occasional turning until the surfaces turned gold.

Each shortening was examined for bubbling during deep frying. The obtained doughnuts were allowed to stand at room temperature for 30 minutes after the deep frying, and then examined for appearance and oil oozing on the surface. The doughnuts were further evaluated for feeling in the mouth with respect to surface greasiness.

### Bubbling during deep frying

The shortenings were evaluated for bubbling in five grades in a sensory test. Those almost free from bubbling were marked at point 5, while rapeseed oil (shortening F) was marked at point 1.

### Appearance

The doughnuts were observed for oil oozing in five grades in a sensory test by ten panelists. Those being almost free from oil oozing were marked at point 5, while those fried with shortening F (rapeseed oil) were marked at point 1. The evaluations by the ten panelists were averaged.

### Feeling in the mouth

The doughnuts were evaluated for greasiness in five grades in a sensory test by ten testers. Those being almost free from greasiness were rated at point 5, while those fried with shortening F (rapeseed oil) were marked at point 1. The evaluations by the ten panelists were averaged.

The obtained results are shown in Table 8.

**Table 8**

| | Comp. compound | Examples | | | Comp. compound |
|---|---|---|---|---|---|
| Shortening for frying | F | G | H | I | J |
| Bubbling | 1.0 | 4.0 | 4.0 | 4.0 | 3.5 |
| Appearance | 1.0 | 3.0 | 3.6 | 3.4 | 2.1 |
| Feeling in the mouth | 1.0 | 3.1 | 3.5 | 3.4 | 1.9 |

This application is based on Japanese Priority Application 10-51007, filed in the Japanese Patent Office on March 3, 1998.

## Claims

1. A fried food containing a fat composition containing 55% by weight to less than 95 % by weight of diglycerides, in which diglycerides 55% by weight to less than 93 % by weight of the fatty acid groups are unsaturated fatty acid residues,
wherein the fried food is a member selected from fried cakes, French fried potatoes, fried chicken and doughnuts, and
wherein the weight ratio of C₁₄ and C₁₆ saturated fatty acid groups contained in the diglycerides, to C₁₈, C₂₀ and C₂₂ saturated fatty acid groups contained in the diglycerides is 0.3 to 8.0.

2. A fat composition comprising:
a monoglyceride content of 2% by weight or lower, a diglyceride content of 55 to less than 95% by weight, and a triglyceride content of 5 to less than 45% by weight,
wherein
(1) from 55 % by weight to less than 80% by weight of the fatty acid groups contained in the diglycerides are unsaturated fatty acid groups,
(2) the diglycerides comprise 0.5 % by weight to less than 20% by weight of SS components, 20 % by weight to less than 55% by weight of SU components, and 25 % by weight to less than 70% by weight of UU components, wherein S represents a C₁₄₋₂₂ saturated fatty acid group and U represents a C₁₄₋₂₂ unsaturated fatty acid group, wherein the total of %SS+%SU+%UU = 100, and
(3) a weight ratio of C₁₄ and C₁₆ saturated fatty acid groups contained in the diglycerides to C₁₈, C₂₀, and C₂₂ saturated fatty acid groups contained in the diglycerides is 1.0 to 8.0.

3. The fat composition as claimed in claim 2, wherein the fatty acid groups contained in the diglycerides are obtained from a feedstock fat or oil selected from the group consisting of vegetable oils, animal fats, oils and fats obtained by hydrogenation and transesterification thereof and mixtures thereof.

4. The fat composition as claimed in claim 3, wherein the feedstock fat or oil is a member selected from the group consisting of rapeseed oil, sunflower oil, corn oil, soybean oil, rice oil, safflower oil, palm oil, coconut oil, beef tallow, hydrogenation and transesterification products thereof and mixtures thereof.

5. The fat composition as claimed in claim 3, wherein the feedstock fat or oil is a member selected from the group consisting of a mixture of a hardened rapeseed oil and palm oil and a mixture of a hardened soybean oil and palm oil.

6. The fat composition as claimed in any one of the claims 2 to 5, wherein monoglycerides are present in an amount of below 1.5% by weight.

7. The fat composition as claimed in claim 6, wherein monoglycerides are present in an amount of below 1.3% by weight.

8. The fat composition as claimed in any one of the claims 2 to 7, wherein the weight ratio of C₁₄ and C₁₆ saturated fatty acid groups contained in the diglycerides to C₁₈, C₂₀, and C₂₂ saturated fatty acid groups contained in the diglycerides is 2.0 to 7.0.

9. The fat composition as claimed in any one of the claims 2 to 8, wherein the diglycerides comprise 2% by weight to less than 16% by weight of SS components, 25% by weight to less than 50% by weight of SU components, and 30% by weight to less than 65% by weight of UU components.

10. The fat composition as claimed in claim 9, wherein the diglycerides comprise 4 % by weight to less than 12% by weight of SS components, 30 % by weight to less than 48% by weight of SU components, and 35 % by weight to less than 60% by weight of UU components.

11. The fat composition as claimed in any one of the claims 2 to 10, further comprising up to 100 ppm of phospholipids.

12. A fried food containing the composition as claimed in any one of the claims 2 to 11.

13. The fried food as claimed in claim 12, wherein the fried food is selected from fried cakes, french fried potatoes, fried chicken, and doughnuts.

14. A shortening composition, comprising the fat composition as claimed in any one of the claims 2 to 11.

15. Use of a fat composition as defined in any one of the claims 2 to 11 for frying food.

## Patentansprüche

1. Frittiertes Nahrungsmittel, umfassend eine Fettzusammensetzung, enthaltend 55 Gew.% bis weniger als 95 Gew.% Diglyceride, worin bei den Diglyceriden 55 Gew.% bis weniger als 93 Gew.% der Fettsäuregruppen ungesättigte Fettsäurereste sind, worin das frittierte Nahrungsmittel ein Mitglied ist, ausgewählt aus Krapfen, Pommes Frites, Brathähnchen und Doghnuts, und worin das Gewichtsverhältnis der gesättigten C₁₄- und C₁₆-Fettsäuregruppen, die in den Glyceriden enthalten sind, zu den gesättigten C₁₈-, C₂₀- und C₂₂-Fettsäuregruppen, die in den Diglyceriden enthalten sind, 0,3 bis 8,0 ist.

2. Fettzusammensetzung, umfassend:
einen Monoglyceridgehalt von 2 Gew.% oder weniger, einen Diglyceridgehalt von 55 bis weniger als 95 Gew.% und einen Triglyceridgehalt von 5 bis weniger als 45 Gew.%, worin
(1) von 55 Gew.% bis weniger als 80 Gew.% der Fettsäuregruppen, die in den Diglyceriden enthalten sind, ungesättigte Fettsäuregruppen sind,
(2) die Diglyeride 0,5 bis weniger als 20 Gew.% SS-Komponenten, 20 Gew.% bis weniger als 55 Gew.% SU-Komponenten und 25 Gew.% bis weniger als 70 Gew.% UU-Komponenten enthalten, worin S eine gesättigte C₁₄₋₂₄-Fettsäuregruppe und U eine ungesättigte C₁₄₋₂₂-Fettsäuregruppe ist, worin die Gesamtmenge an %SS+%SU+%UU = 100, und
(3) ein Gewichtsverhältnis von gesättigten C₁₄- und C₁₆-Fettsäuregruppen, die in den Diglyceriden enthalten sind, zu gesättigten C₁₈-, C₂₀- und C₂₂- Fettsäuregruppen, die in den Diglyceriden enthalten sind, 1,0 bis 8,0 ist.

3. Fettzusammensetzung nach Anspruch 2, worin die Fettsäuregruppen, die in den Diglyceriden enthalten sind, von einem Fett- oder Öl-Ausgangsmaterial enthalten sind, ausgewählt aus der Gruppe, bestehend aus pflanzlichen Ölen, tierischen Fetten, Ölen und Fetten, erhalten durch Hydrierung und Umesterung davon und Mischungen davon.

4. Fettzusammensetzung nach Anspruch 3, worin das Fett- oder Ölausgangsmaterial ein Material ist, ausgewählt aus der Gruppe, bestehend aus Rapssamenöl, Sonennblumenöl, Maisöl, Sojabohnenöl, Reisöl, Saffloröl, Palmöl, Cocosnussöl, Rindertalg, Hydrierungs- und Umesterungsprodukten davon und Mischungen davon.

5. Fettzusammensetzung nach Anspruch 3, worin das Fett- oder Ölausgangsmaterial ein Mitglied ist, ausgewählt aus der Gruppe, bestehend aus einer Mischung eines gehärteten Rapssamenöls und Palmöls und einer Mischung aus gehärtetem Sojaöl und Palmöl.

6. Fettzusammensetzung nach einem der Ansprüche 2 bis 5, worin Monoglyceride in einer Menge von weniger als 1,5 Gew.% vorhanden sind.

7. Fettzusammensetzung nach Anspruch 6, worin Monoglyceride in einer Menge von weniger als 1,3 Gew.% vorhanden sind.

8. Fettzusammensetzung nach einem der Ansprüche 2 bis 7, worin das Gewichtsverhältnis von gesättigten C₁₄- und C₁₆-Fettsäuregruppen, die in den Diglyceriden enthalten sind, zu gesättigten C₁₈-, C₂₀- und C₂₂-Fettsäuregruppen, die in den Diglyceriden enthalten sind, 2,0 bis 7,0 ist.

9. Fettzusammensetzung nach einem der Ansprüche 2 bis 8, worin die Diglyceride 2 Gew.% bis weniger als 16 Gew.% SS-Komonenten, 25 Gew.% bis weniger als 50 Gew.% SU-Komonenten und 30 Gew.% bis weniger als 65 Gew.% UU Komponenten umfassen.

10. Fettzusammensetzung nach Anspruch 9, worin die Diglyceride 4 Gew.% bis weniger als 12 Gew.% SS-Komonenten, 30 Gew.% bis weniger als 48 Gew.% SU-Komponenten und 35 Gew.% bis weniger als 60 Gew.% UU-Komponenten enthalten.

11. Fettzusammensetzung nach einem der Ansprüche 2 bis 10, weiterhin umfassend bis zu 100 ppm Phospholipide.

12. Frittiertes Nahrungsmittel, umfassend die Zusammensetzung nach einem der Ansprüche 2 bis 11.

13. Frittiertes Nahrungsmittel nach Anspruch 12, worin das frittierte Nahrungsmittel ausgewählt ist aus Krapfen, Pommes Frites, Brathuhn und Doghnuts.

14. Backzusammensetzung, umfassend die Fettzusammensetzung nach einem der Ansprüche 2 bis 11.

15. Verwendung einer Fettzusammensetzung wie in einem der Ansprüche 2 bis 11 definiert, zum Frittieren von Nahrungsmitteln.

## Revendications

1. Produit alimentaire frit contenant une composition de matière grasse contenant 55 % en poids à moins de 95 % en poids de diglycérides, diglycérides dans lesquels 55 % en poids à moins de 93 % en poids des groupements acides gras sont des résidus acides gras insaturés,
dans lequel le produit alimentaire frit est un élément choisi parmi des gâteaux frits, des pommes de terre frites, du poulet frit et des beignets, et
dans lequel le rapport massique des groupements acides gras saturés en C₁₄ et en C₁₆ contenus dans les diglycérides, sur les groupements acides gras saturés en C₁₈, en C₂₀ et en C₂₂ contenus dans les diglycérides est de 0,3 à 8,0.

2. Composition de matière grasse comprenant :
une teneur en monoglycérides de 2 % en poids ou moins, une teneur en diglycérides de 55 à moins de 95 % en poids, et une teneur en triglycérides de 5 à moins de 45 % en poids, dans laquelle
(1) de 55 % en poids à moins de 80 % en poids des groupements acides gras contenus dans les diglycérides sont des groupements acides gras insaturés,
(2) les diglycérides comprennent 0,5 % en poids à moins de 20 % en poids de composants SS, de 20 % en poids à moins de 55 % en poids de composants SU, et de 25 % en poids à moins de 70 % en poids de composants UU, où S représente un groupement acide gras saturé en C_{14 à 22} et U représente un groupement acide gras insaturé en C_{14 à 22}, où le total de %SS + %SU + %UU = 100, et
(3) un rapport massique des groupements acides gras saturés en C₁₄ et en C₁₆ contenus dans les diglycérides sur les groupements acides gras saturés en C₁₈, en C₂₀ et en C₂₂ contenus dans les diglycérides est de 1,0 à 8,0.

3. Composition de matière grasse selon la revendication 2,
dans laquelle les groupements acides gras contenus dans les diglycérides sont obtenus à partir d'une matière grasse ou d'une huile de départ choisies parmi le groupe constitué d'huiles végétales, de graisses animales, d'huiles et de graisses obtenues par hydrogénation et transestérification de celles-ci et de mélanges de celles-ci.

4. Composition de matière grasse selon la revendication 3, dans laquelle la graisse ou l'huile de départ est un élément choisi parmi le groupe constitué d'huile de colza, d'huile de tournesol, d'huile de maïs, d'huile de soja, d'huile de riz, d'huile de carthame, d'huile de palme, d'huile de noix de coco, de graisse de boeuf, de produits d'hydrogénation et de transestérification de celles-ci et de mélanges de celles-ci.

5. Composition de matière grasse selon la revendication 3, dans laquelle la graisse ou l'huile de départ est un élément choisi parmi le groupe constitué d'un mélange d'huile de colza durcie et d'huile de palme et d'un mélange d'huile de soja durcie et d'huile de palme.

6. Composition de matière grasse selon l'une quelconque des revendications 2 à 5, dans laquelle les monoglycérides sont présents dans une proportion au-dessous de 1,5 % en poids.

7. Composition de matière grasse selon la revendication 6, dans laquelle les monoglycérides sont présents dans une proportion au-dessous de 1,3 % en poids.

8. Composition de matière grasse selon l'une quelconque des revendications 2 à 7, dans laquelle le rapport massique des groupements acides gras saturés en C₁₄ et en C₁₆ contenus dans les diglycérides sur les groupements acides gras saturés en C₁₈, en C₂₀ et en C₂₂ contenus dans les diglycérides est de 2,0 à 7,0.

9. Composition de matière grasse selon l'une quelconque des revendications 2 à 8, dans laquelle les diglycérides comprennent 2 % en poids à moins de 16 % en poids de composants SS, 25 % en poids à moins de 50 % en poids de composants SU et 30 % en poids à moins de 65 % en poids de composants UU.

10. Composition de matière grasse selon la revendication 9, dans laquelle les diglycérides comprennent 4 % en poids à moins de 12 % en poids de composants SS, 30 % en poids à moins de 48 % en poids de composants SU et 35 % en poids à moins de 60 % en poids de composants UU.

11. Composition de matière grasse selon l'une quelconque des revendications 2 à 10, comprenant en outre jusqu'à 100 ppm de phospholipides.

12. Produit alimentaire frit contenant la composition selon l'une quelconque des revendications 2 à 11.

13. Produit alimentaire frit selon la revendication 12, dans lequel le produit alimentaire frit est choisi parmi des gâteaux frits, des pommes de terre frites, du poulet frit et des beignets.

14. Composition de graisse de cuisine, comprenant la composition de matière grasse selon l'une quelconque des revendications 2 à 11.

15. Utilisation d'une composition de matière grasse selon l'une quelconque des revendications 2 à 11 en vue de frire un produit alimentaire.
